(19) Europäisches Patentamt
European Patent Office
Office européen des brevets

(11) **EP 1 589 395 B1**

(12) **FASCICULE DE BREVET EUROPEEN**

(45) Date de publication et mention
de la délivrance du brevet:
**08.06.2011 Bulletin 2011/23**

(51) Int Cl.:
***G06F 21/02*** *(2006.01)*   ***G06F 21/00*** *(2006.01)*

(21) Numéro de dépôt: **05007724.7**

(22) Date de dépôt: **08.04.2005**

(54) **Microprocesseur comprenant des moyens de signature pour détecter une attaque par injection d'erreur**

Mikroprozessor mit Signaturmitteln zur Detektion eines Fehlerinjektionsangriffes

Microprocessor comprising signing means for detecting an error injection attack

(84) Etats contractants désignés:
**DE FR GB IT**

(30) Priorité: **21.04.2004 FR 0404183**

(43) Date de publication de la demande:
**26.10.2005 Bulletin 2005/43**

(73) Titulaire: **STMicroelectronics SA**
**92210 Montrouge (FR)**

(72) Inventeurs:
• **Bancel, Frédéric**
**13113 Lamanon (FR)**
• **Berard, Nicolas**
**13530 Trets (FR)**

(74) Mandataire: **Marchand, André**
**OMNIPAT**
**24 Place des Martyrs de la Résistance**
**13100 Aix-en-Provence (FR)**

(56) Documents cités:
**EP-A- 1 376 367      US-A- 6 038 667**
**US-A1- 2004 034 823**

**Description**

La présente invention concerne la protection des circuits intégrés à microprocesseur contre les attaques par injection d'erreur.

La présente invention concerne plus particulièrement un procédé pour surveiller l'exécution d'une séquence de codes-instructions dans un circuit intégré comprenant une unité centrale de traitement prévue pour exécuter de tels codes-instructions, ainsi qu'un circuit intégré du type précité comprenant des moyens de surveillance de l'exécution d'au moins une séquence de codes-instructions comportant au moins un code-instruction.

Ces dernières années, les techniques de piratage des circuits intégrés sécurisés à microprocesseur (microprocesseurs, microcontrôleurs, mémoires à microprocesseur...) ont considérablement évolué. A l'heure actuelle, les méthodes de piratage les plus avancées consistent à injecter des erreurs en des points déterminés d'un circuit intégré lors de l'exécution d'opérations dites sensibles, par exemple des opérations d'authentification ou des opérations d'exécution d'un algorithme de cryptographie. De telles attaques par injection d'erreur, appelées également attaques par injection de faute, permettent, en combinaison avec des modèles mathématiques, de déduire la structure d'un algorithme de cryptographie et/ou les clefs secrètes qu'il utilise. L'injection de faute peut être faite de diverses manières, en introduisant des perturbations ("glitches") dans la tension d'alimentation du circuit intégré, en introduisant des perturbations dans le signal d'horloge du circuit intégré, en exposant le circuit intégré à des radiations, etc..

Ainsi, la détection des injections d'erreur est considérée comme une mesure essentielle pour garantir un haut niveau de sécurité à certains circuits intégrés, notamment les circuits intégrés pour cartes à puce.

On connaît déjà, notamment par EP 1 161 725, un procédé de surveillance de l'exécution d'un programme consistant à produire des signatures cumulatives qui sont fonction des codes-instructions qui défilent dans le registre d'instructions d'un microprocesseur. Un tel procédé permet de détecter un déraillement du programme en cours d'exécution, dû notamment à une injection d'erreur. Toutefois, un type d'attaque contre lequel un circuit intégré à microprocesseur doit être protégé est l'injection d'erreur dans les données fournies à un élément périphérique, notamment un bloc de calcul cryptographique (qui est généralement intégré sur la même microplaquette de silicium que le microprocesseur). Or, le contrôle de la bonne exécution d'une séquence de codes-instructions ne permet pas de détecter une telle attaque, car le programme s'exécute normalement en ce qui concerne la valeur et la succession des codes-instructions dans le registre d'instructions. Ainsi, ce procédé de surveillance classique ne permet pas de détecter une injection d'erreur dans les chemins de données voire dans des signaux de contrôle du microprocesseur. US-A-2004/0034823 enseigne également de produire des signatures cumulatives à partir d'une séquence de valeurs déterministes prélevées dans un processeur, comme la séquence de valeurs d'un compteur ordinal (PVC) ou, à la place de cette séquence de valeur, une séquence d'instructions ou de données.

La présente invention se base sur la constatation selon laquelle l'exécution de codes-instructions par l'unité centrale de traitement (CPU) d'un circuit intégré à microprocesseur fait intervenir divers signaux qui sont parfois déterministes, c'est à dire prédictibles, et parfois non déterministes. La structure du microprocesseur étant connue du fabricant et généralement de l'utilisateur professionnel, il est possible de dresser un inventaire, pour chaque code-instruction exécuté, des signaux qui sont du type déterministe parmi l'ensemble des signaux d'adresse, de contrôle ou de données intervenant dans l'exécution du code-instruction, et de produire des signatures à partir de tels signaux. Par exemple, des données de type opérande lues dans une mémoire morte comme une mémoire ROM, ou dans des zones protégées en écriture d'une mémoire effaçable et programmable électriquement, sont des données déterministes. Sont également déterministes des adresses circulant sur un bus d'adresse pendant l'exécution de codes-instructions, notamment les adresses de lecture des codes-instructions eux-mêmes (cycles "fetch"), ainsi que des adresses d'opérandes. Selon l'invention, sont également déterministes des signaux de contrôle apparaissant dans le microprocesseur pendant l'exécution des codes-instructions, par exemple des signaux de lecture/écriture, des signaux de sélection de mémoires ou de registres, et des signaux indiquant que l'unité centrale effectue une opération déterminée.

Ainsi, une première idée de la présente invention est de surveiller l'exécution d'une séquence de codes-instructions comprenant au moins un code-instruction en produisant des signatures cumulatives à partir d'une pluralité de signaux déterministes intervenant dans l'exécution du ou des codes-instructions, et de comparer une signature finale obtenue à une signature attendue. Une telle signature attendue peut être déterminée par le programmeur puisqu'elle ne se fonde que sur des signaux déterministes et sur des enchaînements d'opérations déterministes.

D'autre part, le but poursuivi par une telle surveillance de l'exécution d'un programme est, bien entendu, d'émettre un signal d'erreur ayant une valeur active quand une anomalie est détectée. On entend par "valeur active" le fait que le signal d'erreur, lorsqu'il présente cette valeur, déclenche des opérations nécessaires à la protection du circuit intégré, par exemple l'application d'un signal de remise à zéro à l'unité centrale, ou la fourniture d'un signal d'interruption qui fait basculer l'unité centrale dans un sous-programme déterminé, la destruction de données sensibles présentes dans une mémoire, etc., ces diverses opérations de protection étant en soi bien connues de l'homme de l'art.

Selon les procédés de surveillance classiques, un signal d'erreur est généré lorsque le programme atteint une instruction finale de vérification de la signature, qui clôture l'exécution de la séquence de codes-instructions sous surveillance. Or, si un déraillement du programme intervient suite à une injection d'erreur, l'instruction finale de vérification de la signature n'est pas exécutée et le signal d'erreur n'est pas émis.

Une seconde idée de la présente invention est de fournir un signal d'erreur ayant par défaut la valeur active et ne pouvant être neutralisé qu'à la condition qu'une signature finale obtenue après exécution d'une séquence de codes-instructions soit égale à une signature attendue. Un tel signal d'erreur est masqué pendant l'exécution des opérations à contrôler, et le masquage est levé inconditionnellement après écoulement d'un laps de temps correspondant sensiblement au temps d'exécution des opérations à contrôler.

Si le signal d'erreur n'a pas été neutralisé par l'apparition d'une signature valable au moment où le masquage est levé, celui-ci devient actif dans le circuit intégré puisqu'il n'est plus masqué.

Un premier aspect de l'invention est un procédé tel que défini dans la revendication indépendante 1. Un deuxième aspect de l'invention est un circuit intégré comme défini dans la revendication indépendante 9. Divers modes de réalisation de l'invention sont spécifiés dans les revendications dépendantes attenantes.

Ainsi, selon le premier aspect, la présente invention concerne un procédé pour surveiller l'exécution d'une séquence de codes-instructions dans un circuit intégré comprenant une unité centrale de traitement prévue pour exécuter de tels codes-instructions, comprenant les étapes consistant à : pendant l'exécution de la séquence, prélever en divers points du circuit intégré des signaux logiques déterministes d'adresse, de contrôle ou de données intervenant dans l'exécution de la séquence, et produire des signatures cumulatives courantes à partir des signaux logiques déterministes et en synchronisation avec un signal d'horloge, chaque signature cumulative courante étant fonction de la signature cumulative précédente et des signaux logiques déterministes, jusqu'à obtenir, au terme de l'exécution de la séquence, une signature cumulative finale, et comparer la signature cumulative finale avec une signature attendue.

Selon un mode de réalisation, le signal d'horloge qui rythme la production des signatures est le signal d'horloge de l'unité centrale, et une signature cumulative courante est produite à chaque cycle d'horloge de l'unité centrale, pendant l'exécution de la séquence.

Selon un mode de réalisation, les signaux logiques déterministes d'adresse, de contrôle ou de données en fonction desquels les signatures cumulatives courantes sont produites comprennent tout ou partie des signaux suivants : des adresses appliquées à des éléments périphériques de l'unité centrale, des signaux de contrôle des éléments périphériques, des signaux indicatif d'opérations en cours, des données formant des opérandes ou des codes-instructions, et un signal est exclu du calcul d'une signature cumulative s'il n'est pas déterministe pendant le cycle d'horloge durant lequel la signature est produite.

Selon un mode de réalisation, des entrées du circuit de calcul de signatures sont inhibées au moyen d'un circuit de masquage à logique câblée configurable.

Selon un mode de réalisation, les entrées du circuit de calcul de signatures sont connectées à un bus de données, à un bus d'adresse, et à un bus de contrôle véhiculant des signaux de contrôle d'éléments périphériques de l'unité centrale.

Selon un mode de réalisation, le calcul des signatures cumulatives est effectué au moyen d'un registre à décalage à contre-réaction linéaire.

Selon un mode de réalisation, le procédé comprend les étapes consistant à : pendant l'exécution de la séquence, produire un signal d'erreur ayant par défaut une valeur active tant que la signature cumulative courante est différente d'une signature attendue, masquer le signal d'erreur pendant un intervalle de temps prédéterminé correspondant sensiblement à la durée d'exécution présumée de la séquence, et lever inconditionnellement le masquage du signal d'erreur à l'expiration de l'intervalle de temps prédéterminé.

Selon un mode de réalisation, le procédé comprend des étapes de conception d'un programme qui comporte la séquence de codes-instruction, les étapes de conception comprenant l'insertion dans le programme d'instructions de sélection des signaux déterministes à partir desquels les signatures courantes sont produites pendant l'exécution de la séquence.

La présente invention concerne également un circuit intégré comprenant une unité centrale de traitement pour exécuter un programme comprenant des codes-instructions, et des moyens de surveillance de l'exécution d'au moins une séquence de codes-instructions comportant au moins un code-instruction, les moyens de surveillance comprenant : un circuit de calcul de signatures comprenant des entrées parallèles reliées en divers points du circuit intégré où transitent des signaux logiques déterministes d'adresse, de contrôle ou de données intervenant dans l'exécution de la séquence, le circuit de calcul de signatures étant agencé pour produire des signatures cumulatives courantes qui sont fonction des signaux déterministes, jusqu'à l'obtention d'une signature cumulative finale au terme de l'exécution de la séquence, un circuit de masquage à logique câblée configurable, pour inhiber les entrées du circuit de calcul de signatures susceptibles de recevoir des signaux non déterministes pendant l'exécution de la séquence, et des moyens de comparaison de la signature cumulative finale avec une signature attendue.

Selon un mode de réalisation, le circuit de masquage à logique câblée configurable comprend un registre accessible au moins en écriture pour recevoir une chaîne de bits formant un masque binaire.

Selon un mode de réalisation, le circuit de calcul de signatures comprend des entrées reliées à des points du circuit intégré où transitent tout ou partie des signaux suivants : des adresses appliquées à des éléments périphériques de l'unité centrale, des signaux de contrôle des éléments périphériques, des signaux indicatif d'opérations en cours, des données formant des opérandes ou des codes-instructions.

Selon un mode de réalisation, le circuit de calcul de signatures comprend des entrées reliées à un bus de données, des entrées reliées à un bus d'adresse, et des entrées reliées à un bus de contrôle sur lequel transitent des signaux de contrôle d'éléments périphériques de l'unité centrale.

Selon un mode de réalisation, les moyens de production d'un signal d'erreur comprennent : une minuterie pour mesurer un intervalle de temps prédéterminé, des moyens pour produire un signal d'erreur ayant par défaut une valeur active tant que la signature cumulative courante est différente de la signature attendue, et des moyens pour masquer le signal d'erreur pendant la mesure de l'intervalle de temps par la minuterie, et lever inconditionnellement le signal d'erreur à l'expiration de l'intervalle de temps.

Selon un mode de réalisation, le circuit intégré comprend un comparateur dont la sortie fournit le signal d'erreur, recevant sur une entrée la signature cumulative courante et sur une autre entrée la signature attendue, un moyen à mémoire tel une bascule pour fournir le signal d'erreur, agencé pour désactiver le signal d'erreur lorsque la sortie du comparateur indique une égalité de signatures, et un circuit logique de masquage du signal d'erreur, recevant sur une entrée le signal d'erreur et sur une autre entrée un signal fournit par la minuterie, le circuit logique de masquage étant transparent ou non transparent vis-à-vis du signal d'erreur selon la valeur du signal émis par la minuterie.

Selon un mode de réalisation, le circuit de calcul de signatures est cadencé par un signal d'horloge de l'unité centrale, et calcule une signature cumulative courante à chaque cycle d'horloge, en remplaçant chaque signature précédente par une nouvelle signature, dans un registre de mémorisation de la signature courante.

Ces objets, caractéristiques et avantages ainsi que d'autres de la présente invention seront exposés plus en détail dans la description suivante d'un exemple de réalisation d'un circuit intégré selon l'invention, faite à titre non limitatif en relation avec les figures jointes parmi lesquelles :

- la figure 1 représente un circuit intégré à microprocesseur comprenant un dispositif de surveillance selon l'invention, représenté sous forme de blocs, et
- la figure 2 est une vue détaillée d'un circuit de production de signatures représenté sous forme de blocs en figure 1.

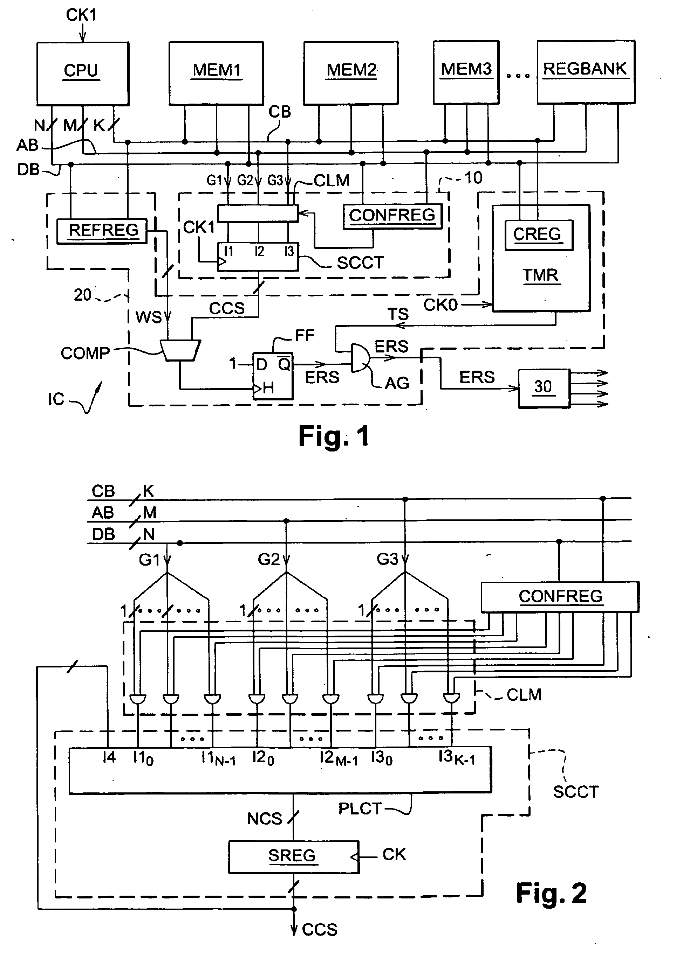

La figure 1 représente l'architecture d'un circuit intégré IC du type microprocesseur ou microcontrôleur, équipé d'un dispositif de surveillance selon l'invention. Un tel dispositif permet de surveiller le fonctionnement du circuit intégré pendant l'exécution d'une séquence de codes-instructions afin de détecter, notamment, une injection d'erreur.

Le circuit intégré IC comprend classiquement un CPU (unité centrale de traitement) et des éléments périphériques du CPU, ici des mémoires MEM1, MEM2, MEM3 et une banque de registres REGBANK. D'autres éléments périphériques peuvent être prévus, non représentés ici, notamment un circuit de calcul cryptographique. La mémoire MEM1 est par exemple une mémoire non volatile de type ROM (mémoire morte), la mémoire MEM2 une mémoire effaçable et programmable électriquement de type EEPROM, et la mémoire MEM3 une mémoire volatile de type RAM. La mémoire MEM1 contient par exemple des programmes maîtres (programmes développés par le fabriquant : programmes de test, de gestion de la sécurité, d'authentification...) et des opérandes. La mémoire MEM2 comprend par exemple des programmes application (programmes développés par l'utilisateur) et des opérandes. Ces divers programmes sont composés de codes-instructions exécutables par le CPU. La mémoire MEM3 contient généralement des données d'application, qui s'effacent lorsque le circuit intégré est hors tension. Enfin, la banque de registres REGBANK peut contenir des données volatiles comme des variables, des résultats de calculs, des drapeaux, etc.

Ces divers éléments périphériques sont reliés ici au CPU par un bus de données DB de N bits, un bus d'adresse AB de M bits ainsi qu'un bus de contrôle CB de K bits. On désigne par "bus de contrôle" un ensemble de fils véhiculant des signaux de sélection ou d'information émis par le CPU à l'attention des éléments périphériques, ou vice-versa. Le bus CB véhicule notamment des signaux SEL1, SEL2, SEL3 de sélection des mémoires MEM1, MEM2, MEM3, un signal SEL4 de sélection de la banque de registres REGBANK, un signal R/W de lecture ou écriture, ainsi qu'un signal FETCH émis par le CPU lors de la lecture d'un code-instruction dans l'une des mémoires programme MEM1, MEM2.

Le dispositif de surveillance selon l'invention comprend un circuit de production de signatures 10 et un circuit de détection d'erreur 20, délimités par des traits pointillés sur la figure 1. Chaque circuit 10, 20 est en soi indépendant de l'autre et correspond à un aspect de la présente invention. Ainsi, comme cela apparaîtra à la lecture de ce qui suit, le circuit 10 peut être combiné avec un circuit de détection d'erreur autre que le circuit 20 représenté, et vice-versa.

**Premier aspect de l'invention**

Le circuit de production de signatures 10 comprend tout d'abord un circuit de calcul de signatures SCCT à logique câblée. Le circuit SCCT comprend des entrées parallèles I1, I2, I3 et est cadencé par un signal d'horloge CK1 qui est de préférence le signal d'horloge du CPU. Le circuit SCCT est par exemple un registre LSFR classique (Linear

EP 1 589 395 B1

Feedback Shift Register), soit un registre à décalage à contre réaction linéaire. Comme représenté plus en détail sur la figure 2, le circuit SCCT comprend un circuit logique PLCT et un registre de signature SREG à entrée et sortie de type parallèle. Le circuit PLCT exécute une fonction de signature Fs et comprend des entrées I1, I2, I3 formant les entrées du circuit SCCT, ainsi qu'une entrée I4 recevant une signature cumulative courante CCS. La sortie du circuit PLCT fournit à l'entrée du registre SREG une signature cumulative suivante NCS qui est fonction de la signature cumulative courante CCS et des entrées I1, I2, I3, soit :

$$(1) \quad NCS = Fs \ (CCS, \ I1, \ I2, \ I3)$$

A chaque nouveau cycle d'horloge CK1, le registre SREG recopie sur sa sortie la signature présente sur son entrée, de sorte que la signature suivante fournie par le circuit PLCT au cours du cycle d'horloge précédent devient la signature courante, et que la signature courante du cycle d'horloge précédent devient la signature précédente PCS, soit :

$$(2) \quad CCS = Fs \ (PCS, \ I1, \ I2, \ I3)$$

la relation (2) étant équivalente à la relation (1) vue depuis la sortie du registre SREG.

Selon l'invention, les entrées I1, I2, I3 du circuit SCCT sont reliées à divers points du circuit intégré où transitent des signaux d'adresse, de contrôle ou de données intervenant dans l'exécution des codes-instructions présents dans les mémoires MEM1, MEM2, et reçoivent des groupes G1, G2, G3 de signaux générateurs de signature. Ici, l'entrée I1 est reliée au bus de données DB, l'entrée I2 est reliée au bus d'adresse AB, et l'entrée I3 est reliée au bus de contrôle CB. Ainsi, le groupe de signaux G1 comprend N bits de données $d_0$, $d_1$ . . . $d_{N-1}$ prélevés sur le bus de données, qui sont appliqués à N entrées élémentaires $I1_0$, $I1_1$, . . . $I1_{N-1}$ formant l'entrée I1. Le groupe de signaux G2 comprend N bits d'adresse $a_0$, $a_1$ . . . $a_{M-1}$ prélevés sur le bus d'adresse et appliqués à N entrées élémentaires $I2_0$, $I2_1$, . . . $I2_{M-1}$ formant l'entrée I2. Le groupe de signaux G3 comprend K signaux de contrôle $c_0$, $c_1$ . . . $c_{K-1}$ prélevés sur le bus de contrôle et appliqués à N entrées élémentaires $I3_0$, $I3_1$, . . . $I3_{K-1}$ formant l'entrée 13.

Selon le postulat sur lequel se fonde l'invention, les signaux qui transitent en de tels points du circuit intégré peuvent être parfois déterministes et parfois non déterministes (non prédictibles) selon l'opération que le CPU exécute. Un signal est déterministe quand sa valeur est connue par le programmeur ainsi que l'instant où ce signal apparaît pendant l'exécution du programme. Par exemple, l'exécution d'une instruction de lecture d'un opérande dans la mémoire morte MEM1 est une opération qui est déterministe dans tous ses aspects, c'est-à-dire en ce qui concerne :

- la valeur de l'opérande qui est lue dans la mémoire, de sorte que les signaux apparaissant sur le bus de données (bits de l'opérande), formant le groupe G1, sont déterministes,
- l'adresse de lecture de l'opérande, de sorte que l'ensemble des signaux du groupe G2 apparaissant sur le bus d'adresse sont également déterministes, et
- le signal de sélection de la mémoire MEM1 et le signal de lecture R/W apparaissant sur le bus de contrôle, de sorte que l'ensemble des signaux du groupe G3 sont déterministes (les autres signaux de contrôle étant supposés inactifs, donc ayant également une valeur logique déterminée).

De même, l'exécution d'une opération de lecture (FETCH) d'un code-instruction est déterministe dans tous ses aspects, tant en ce qui concerne le code-instruction (bus de données , groupe G1) que l'adresse de lecture du code-instruction (bus d'adresse, groupe G2) que les signaux de contrôle (signal FETCH, signal de sélection de la mémoire MEM1 et MEM2, signal de lecture R/W, groupe G3) .

Ces signaux peuvent également ne pas être déterministes, en tout ou en partie. Par exemple, une variable calculée en fonction d'une donnée ou d'un évènement non prédictible est une variable qui est elle-même non prédictible. Toutefois la lecture d'une telle variable dans une mémoire, par exemple dans la mémoire MEM3 (mémoire RAM) ou dans la banque de registres, bien que n'étant pas déterministe en ce qui concerne la valeur de la variable elle-même, peut être prédictible en ce qui concerne l'adresse de lecture de la variable si cette adresse a été déterminée par le programmeur et se trouve ainsi fixée par le programme, et ne dépend pas du résultat d'un calcul faisant intervenir un paramètre ou une donnée non prédictible. Dans ce cas, les signaux prélevés sur le bus de données, soit les signaux formant le groupe G1, ne sont pas déterministes, tandis que les signaux d'adresse formant le groupe G2 et les signaux de contrôle formant le groupe G3 le sont.

Ainsi, selon l'invention, les entrées I1, I2, I3 du circuit de calcul de signatures SSCT sont reliées aux bus DB, AB, CB par l'intermédiaire d'un circuit de masquage à logique câblée configurable CLM dont la configuration est assurée par un registre CONFREG. Le registre CONFREG est accessible au moins en écriture, de préférence en lecture/écriture, par l'intermédiaire du bus de données DB, et est relié au bus de contrôle pour sa sélection en lecture et/ou écriture.

Le registre CONFREG reçoit une chaîne de bits formant un masque binaire, constitué ici de trois masques binaires distincts M1, M2, M3 concaténés. Le masque M1 est prévu pour masquer tout ou partie des entrées élémentaires de l'entrée I1 et comprend N bits $m1_0$, $m1_1$. . . $m1_{N-1}$. Le masque M2 est prévu pour masquer tout ou partie des entrées élémentaires de l'entrée I2 et comprend M bits $m2_0$, $m2_1$. . . $m2_{M-1}$. Le masque M3 est prévu pour masquer tout ou partie des entrées élémentaires de l'entrée I3 et comprend K bits $m3_0$, $m3_1$. . . $m3_{K-1}$. Chaque bit de masque est ainsi associé à l'un des signaux générateurs de signature $d_0$ à $d_{N-1}$, $a_0$ à $a_{M-1}$, $c_0$ à $c_{K-1}$, respectivement, qu'il permet de masquer ou non.

Le registre CONFREG permet ainsi d'inhiber, parmi les N+M+K entrées du circuit SCCT, celles qui reçoivent, pendant une séquence de production de signatures, des signaux générateurs de signature qui ne sont pas déterministes. Le masquage est réalisé matériellement dans le circuit CLM au moyen d'une pluralité de portes ET recevant chacune sur une entrée l'un des signaux $d_0$ à $d_{N-1}$, $a_0$ à $a_{M-1}$, $c_0$ à $c_{K-1}$ et sur une autre entrée le bit de masque correspondant $m1_0$ à $m1_{N-1}$, $m2_0$ à $2_{M-1}$, $m3_0$ à $m3_{K-1}$, la sortie de chaque porte ET étant appliquée à l'entrée élémentaire correspondante $I1_0$ à $I1_{N-1}$, $I2_0$ à $I2_{M-1}$, $I3_0$ à $I3_{K-1}$ du circuit SCCT. Ainsi, la relation (2) ci-dessus s'écrit comme suit :

$$(3) \quad \texttt{CCS = Fs(PCS, G1*M1, G2*M2, G3*M3)}$$

"*" étant ici la fonction ET appliquée bit à bit.

Ici, un bit à 0 dans le masque binaire inhibe le signal générateur de signature de rang correspondant en forçant sa valeur à 0. Toute autre fonction d'inhibition combinatoire peut toutefois être utilisée, par exemple la fonction OU, NON OU, NON ET, etc.. Des interrupteurs pilotés par les bits du masque binaire peuvent également être utilisés comme moyens d'inhibition.

On décrira maintenant un exemple d'utilisation du circuit de production de signatures 10 pendant l'exécution d'un programme par le CPU. Au moment de l'élaboration du programme, les parties de programme correspondant à l'exécution d'opérations sensibles, c'est-à-dire des opérations nécessitant un haut niveau de sécurité, sont divisées en séquences déterministes. Chaque séquence déterministe comprend au moins un code-instruction ou une suite prédictible de codes-instructions. A titre de contre-exemple, une partie de programme comprenant une instruction de saut conditionnel qui est fonction d'une donnée non prédictible n'est pas une séquence déterministe. Une telle séquence doit alors être divisée en séquences déterministes de plus petite taille. Par ailleurs, l'exécution de chaque séquence déterministe fait intervenir des signaux d'adresse, de contrôle ou de données dont certains sont déterministes et d'autres ne le sont pas, comme expliqué ci-dessus. Il convient ainsi de pas confondre le caractère déterministe d'une séquence, sur lequel se fonde par exemple le procédé décrit par EP 1 161 725, et le caractère déterministe des signaux intervenant dans l'exécution de la séquence déterministe, sur lequel se fonde la présente invention.

Pour fixer les idées, considérons un exemple de séquence sécurisée comprenant une instruction de lecture d'un opérande à une adresse AD1 dans la mémoire MEM1, et une instruction d'écriture de l'opérande dans un registre d'adresse AD2 présent dans la banque de registres. Cette séquence, stockée dans la mémoire MEM1, comprend par exemple les codes-instructions suivants :

[READ MEM1] [AD1]
[WRITE REGBANK] [AD2]

Afin de sécuriser l'exécution de cette séquence, on insère dans le programme, avant la séquence elle-même, une instruction de chargement des masques M1, M2, M3 dans le registre CONFREG et une instruction de remise à zéro du registre de signature SREG (on suppose ici que le circuit SCCT est actif en permanence et ne nécessite pas d'être activé par une commande particulière pour produire des signatures). La séquence modifiée par insertion de ces instructions se présente alors ainsi (les termes figurant entre les signes "<" et ">" étant des commentaires) :

<chargement des masques M1, M2, M3 dans le registre CONFREG>
[LOAD CONFREG] [M1, M2, M3]
<mise à 0 du registre SREG>
[RESET SREG]
<séquence sécurisée>
[READ MEM1] [AD1] <code-instruction 1>
[WRITE REGBANK][AD2] <code-instruction 2>

Ici, le masque binaire chargé dans le registre CONFREG ne comporte que des bits à 1 car la séquence à exécuter ne comprend que des signaux déterministes, qu'il s'agisse de l'adresse de lecture ou d'écriture de l'opérande, de la valeur de l'opérande (opérande connu car présente en mémoire ROM) ou des signaux de contrôle. Par ailleurs, la remise à zéro du registre SREG a pour effet de placer dans celui-ci une signature initiale qui forme la valeur de départ (ou valeur de base) pour le calcul des signatures cumulatives. Cette valeur initiale peut aussi être choisie non nulle, pourvu qu'elle soit connue du programmeur afin qu'il puisse déterminer la signature attendue au terme de l'exécution de la séquence, comme cela sera décrit plus loin.

Après le cycle d'horloge suivant celui où le registre de signature SREG est remis à zéro, le circuit de calcul de signatures SCCT commence à produire des signatures cumulatives à chaque cycle d'horloge en tenant compte de tous les signaux déterministes prélevés dans le circuit intégré. Le tableau 1 ci-après décrit schématiquement le processus de production des signatures cumulatives courantes CS1, CS2, CS3... à chaque cycle d'horloge du CPU. On suppose ici que chaque instruction est lue en deux cycles d'horloge du CPU (cycles "fetch") et est exécutée en deux cycles d'horloge. On distingue ainsi les cycles suivants :

Cycle 1 : adressage de la mémoire MEM1 (cycle "fetch"),
Cycle 2 : lecture du code-instruction 1 (cycle "fetch"),
Cycle 3 : adressage de la mémoire MEM1 à l'adresse AD1,
Cycle 4 : lecture de l'opérande dans la mémoire MEM1 et chargement de l'opérande dans l'ALU du CPU,
Cycle 5 : adressage de la mémoire MEM1 (cycle "fetch"),
Cycle 6 : lecture du code-instruction 2 (cycle "fetch"),
Cycle 7 : lecture de l'ALU et placement de l'opérande sur le bus de données, adressage et sélection du registre d'adresse AD2 dans la banque de registres REGBANK
Cycle 8 : enregistrement de l'opérande dans le registre.

Ne sont représentés dans le tableau 1 que les signaux générateurs de signature ayant une valeur différente de leur valeur par défaut (valeur inactive). Les adresses AD_code1 et AD code2 sont les adresses de lecture des deux codes-instructions de la séquence sécurisée, fournis par un compteur de programme PC de l'unité centrale, non représenté sur les figures. Le signal R/W est ici à 1 pour déclencher une lecture et à 0 pour une écriture. Les valeurs notées "xxx" sont des valeurs par défaut du bus de données ou d'adresse quand une donnée ou un code ne transite pas sur le bus. De telles valeurs par défaut sont déterministes et interviennent dans le calcul de la signature courante au cours du cycle d'horloge concerné. Enfin, les signaux de contrôle IN_ALU et OUT_ALU indiquent que le CPU effectue une opération interne de chargement ou respectivement de lecture d'opérande dans son unité arithmétique et logique ALU (non représentée sur les figures). De tels signaux de contrôle ne sont pas présents sur le bus de contrôle et ne sont donc pas pris en compte dans le calcul de signature. Toutefois ces signaux, ainsi que d'autres signaux internes du CPU, pourraient aussi être "externalisés" à l'instar du signal FETCH, afin d'être pris en compte dans le calcul de signature.

Tableau 1

| | | Bus d'adresse | Bus de données | Bus de contrôle | Cycle | Signatures |
|---|---|---|---|---|---|---|
| **Lecture du code 1** | | AD_code1 | [xxx] | SEL1=1 - FETCH=1 | 1 | CCS1 |
| | | AD_code1 | code 1 | SEL1=1 - FETCH=1 R/W=1 | 2 | CCS2 |
| **Exécution du code 1** | | AD1 | [xxx] | SEL1=1 | 3 | CCS3 |
| | | AD1 | opérande | SEL1=1 - R/W=1 IN_ALU | 4 | CCS4 |
| **Lecture du code 2** | | AD_code2 | [xxx] | SEL1=1 - FETCH=1 | 5 | CCS5 |
| | | AD_code2 | code 2 | SEL1=1 - FETCH=1 R/W=1 | 6 | CCS6 |
| **Exécution du code 2** | | AD2 | opérande | SEL4=1 - OUT_ALU | 7 | CCS7 |
| | | AD2 | opérande | SEL4=1 - R/W=0 | 8 | CCS8 |

Ainsi, à chaque cycle d'horloge, une signature cumulative est produite. Lorsque la séquence est exécutée, la signature cumulative finale obtenue est la signature CCS8. Cette signature est prédictible et est ainsi présumée égale à une signature attendue WS déterminée par le programmeur au moment où le programme est conçu, de préférence au moyen d'un outil logiciel de calcul de signature. La comparaison de la signature finale avec la signature attendue est assurée par le circuit de détection d'erreur 20 qui sera maintenant décrit.

Supposons maintenant que l'adresse AD2 de chargement de l'opérande dans la banque de registre dépend du résultat d'une opération non déterministe effectuée par une partie de programme qui précède la séquence sécurisée. La séquence devient alors semi-déterministe.

Dans ce cas, les signaux sur le bus d'adresse ne sont pas pris en compte au cours des cycles 1 à 8 pour le calcul des signatures cumulatives, car l'adresse AD2 qui est appliquée sur le bus d'adresse au cours des cycles 7 et 8 n'est pas prédictible. Les valeurs des masques binaires sont donc M1=1, M2=0 (gel des bits d'adresse) et M3=1 pour l'ensemble de la séquence sécurisée.

La séquence semi-déterministe peut aussi être scindée en deux sous-séquences sécurisées individuellement, l'une étant entièrement déterministe et formée par les cycles 1 à 4 (exécution du premier code-instruction), l'autre étant semi-déterministe et formée par les cycles 5 à 8 (exécution du second code-instruction). Une première signature cumulative finale, calculée pendant les cycles 1 à 4 en portant à 1 tous les bits de masque, est produite au terme du cycle 4 et est comparée à une première signature attendue. Une seconde signature cumulative finale, calculée pendant les cycles 5 à 8 en portant à 0 le masque binaire M2 et à 1 les masques M1, M3, est produite au terme du cycle 8 et est comparée à une seconde signature attendue.

Il apparaîtra clairement à l'homme de l'art que ce premier aspect de la présente invention est susceptible de diverses variantes et modes de réalisation, notamment en ce qui concerne l'étendue, la nature et le nombre de signaux générateurs de signature pris en compte pour produire les signatures cumulatives. D'autre part, bien que l'on ait indiqué ci-dessus qu'une signature cumulative courante est produite à chaque cycle d'horloge du CPU, le procédé de l'invention peut aussi comprendre des étapes de production de signatures cadencées par un signal d'horloge plus lent que le signal d'horloge du CPU, par exemple la production d'une signature tous les deux ou trois cycles d'horloge du CPU. Toutefois, il est avantageux au plan de la sécurité de ne pas sauter des cycles d'horloge du CPU dans le calcul des signatures cumulatives.

## Second aspect de l'invention

Comme le circuit 10 qui vient d'être décrit, le circuit de détection d'erreur 20 représenté en figure 1 est un circuit à logique câblée qui est autonome vis-à-vis du CPU hormis en ce qui concerne son initialisation et son activation.

Le circuit de détection d'erreur 20 comprend un registre REFREG, un comparateur COMP, une bascule synchrone FF de type Flip-flop (ou bascule D) et une minuterie TMR ("timer").

Le registre REFREG est accessible en lecture, de préférence en lecture/écriture, via le bus de données DB, et est sélectionné au moyen d'un fil du bus de contrôle CB. Il est prévu pour recevoir la signature attendue WS calculée par le programmeur.

La minuterie TMR est un décompteur équipé d'un registre de comptage CREG accessible en écriture, et de préférence en lecture/écriture, via le bus de données DB. La minuterie est cadencée par un signal d'horloge CK0, par exemple un signal d'horloge primaire du circuit intégré à partir duquel le signal d'horloge CK1 est produit. La minuterie est reliée au bus de contrôle CB pour la sélection du registre CREG en lecture/écriture ainsi que pour l'activation de la minuterie. Après chargement d'une consigne de comptage CVAL dans le registre CREG et activation de la minuterie, la minuterie décrémente le registre CREG et fournit un signal de sortie TS qui est à 0. Ce signal passe à 1 lorsque la valeur du registre CREG atteint le zéro. L'intervalle de temps mesuré est ainsi égal à CVAL/T, T étant la période du signal d'horloge CK0.

Le comparateur COMP présente une première entrée reliée à la sortie du registre REFREG, qui reçoit la signature attendue WS, et une seconde entrée reliée à la sortie du registre SREG du circuit de production de signatures 10, qui reçoit la signature cumulative courante CCS. La sortie du comparateur COMP est à 0 tant que la signature courante est différente de la signature attendue, et passe à 1 lorsque les signatures sont égales.

La bascule FF comporte une entrée D, une entrée de synchronisation H, une sortie inversée /Q qui fournit un signal d'erreur ERS, et une entrée RST de remise à zéro. L'entrée D reçoit en permanence la valeur logique 1 et l'entrée H est connectée à la sortie du comparateur COMP. La sortie /Q recopie l'entrée D en inversant sa valeur lorsqu'un front montant apparaît sur l'entrée H. L'entrée RST est reliée à un fil du bus de contrôle CB de manière que la remise à zéro de la bascule FF intervienne automatiquement lorsqu'une signature attendue WS est chargée dans le registre REFREG.

Ainsi, lorsqu'une signature attendue WS est chargée dans le registre REFREG, la bascule FF est remise à zéro et le signal d'erreur ERS sur la sortie /Q passe à 1 tandis que la sortie du comparateur COMP est à 0. Lorsqu'une signature courante CCS est égale à la signature attendue WS et que la sortie du comparateur COMP passe à 1, l'entrée H voit un front montant qui déclenche la bascule. La sortie /Q recopie l'entrée D en inversant sa valeur, de sorte que le signal d'erreur ERS passe à 0.

Par convention, la valeur "1" du signal d'erreur est une valeur active qui provoque un arrêt ou une remise à zéro du CPU ou toute autre mesure d'urgence connue de l'homme de l'art. Ainsi, le signal d'erreur est par défaut à la valeur active et n'est inhibé (passage à 0) que si une signature courante coïncide, à un instant donné, avec la signature attendue WS.

Le signal d'erreur ERS est appliqué à un circuit 30 de gestion d'erreur par l'intermédiaire d'une porte logique AG de type ET qui forme un masque du signal d'erreur. La porte AG reçoit le signal d'erreur ERS sur une entrée et le signal de minuterie TS sur une autre entrée, et sa sortie est appliquée au moyen du circuit de gestion d'erreur 30.

Le circuit 30 est de tout type connu, par exemple un décodeur d'interruption fournissant un signal d'interruption, un circuit de remise à zéro du circuit intégré, un dispositif qui efface automatiquement des données confidentielles présentes dans la mémoire EEPROM (MEM2), etc..

Ainsi, le signal d'erreur ERS fournit par la porte AG au circuit 30 est forcé à 0 par le signal de minuterie TS tant que la minuterie n'a pas terminé le décomptage de la consigne CVAL. Le masquage du signal d'erreur est levé lorsque le signal TS passe à 1. A cet instant, si le signal d'erreur est encore à 1 en sortie de la bascule FF, la sortie de la porte AG passe à 1 et le circuit 30 est activé.

Comme pour le circuit de production de signatures 10, le paramétrage et l'activation du circuit de détection d'erreur 20 comprennent l'insertion d'instructions spécifiques dans le programme exécuté par le CPU, notamment des instructions de chargement de la consigne de comptage CVAL, de chargement de la signature attendue WS et d'activation de la minuterie. Une séquence incorporant de telles instructions se présente par exemple comme indiqué ci-dessous, en reprenant l'exemple décrit plus haut :

```
<chargement de la consigne de comptage dans le registre CREG de la minuterie>
[LOAD TMR] [CVAL]
<activation de la minuterie>
[TMR ON]
<chargement de la signature attendue WS dans le registre REFREG>
[LOAD REFREG] [WS]
<chargement des masques M1, M2, M3 dans le registre CONFREG>
[LOAD CONFREG] [M1, M2, M3]
<mise à 0 du registre SREG>
[RESET SREG]
<exécution de la séquence sécurisée>
[READ MEM1] [AD1]
[WRITE REGBANK] [AD2]
```

D'autres instructions peuvent être insérées dans ce programme, notamment des instructions de lecture des registres REFREG, CONFREG, CREG immédiatement après leur chargement, pour s'assurer que les valeurs qui y ont été chargées sont correctes.

La consigne de comptage CVAL chargée dans la minuterie est déterminée en tenant compte du temps d'exécution des instructions de chargement de la signature WS, de chargement des masques M1-M3 et de remise à zéro du registre de signature SREG, car ces instructions s'interposent ici entre l'instruction d'activation de la minuterie et les instructions formant séquence sécurisée elle-même. De façon générale, la valeur de comptage est choisie de manière que l'intervalle de temps mesuré par la minuterie à compter de son activation arrive à expiration après que l'exécution de la séquence sécurisée est terminée. Ainsi, lorsque le masquage du signal d'erreur est levé (TS=1), le signal d'erreur doit entre-temps être passé à 0. La signature courante doit donc, à un instant donné, être égale à la signature attendue, afin que la sortie du comparateur COMP passe à 1 et que la sortie /Q de la bascule FF passe à 0. Dans le cas contraire, la levée du masquage du signal d'erreur ERS provoque de façon irrémédiable l'application de la valeur active du signal d'erreur au circuit de gestion d'erreur 30.

Grâce à la présente invention, la fourniture du signal d'erreur est immunisée contre un éventuel déraillement de programme. La séquence sécurisée n'est pas suivie d'une instruction de comparaison de signatures, une telle comparaison étant faite en temps réel et de façon hardware. Ainsi, si une injection de faute fait dérailler le programme pendant l'exécution de la séquence sécurisée, la signature courante n'est jamais égale à la signature attendue et le circuit de gestion d'erreur 30 est activé lorsque le temps de masquage est écoulé.

En résumé, le circuit intégré selon l'invention est mis par défaut dans un mode d'erreur qui est temporairement masqué par la minuterie, soit un mode d'erreur potentiel, et bascule automatiquement dans un mode d'erreur non masqué, soit un mode d'erreur actif, lorsque l'intervalle de temps mesuré par la minuterie expire, sauf si entre-temps la signature courante est devenue égale à la signature attendue.

Dans un souci de simplicité, divers signaux dont la prévision est à la portée de l'homme de l'art n'ont pas été décrits dans ce qui précède, notamment des signaux de lecture/écriture et de sélection des registres présents dans les circuits 10, 20 selon l'invention.

Il apparaîtra clairement à l'homme de l'art que le second aspect de l'invention est susceptible de diverses variantes de réalisation et perfectionnements. Ainsi, dans une variante de réalisation, la bascule FF est supprimée, le signal d'erreur ERS est fourni directement par le comparateur COMP et un moyen de démarrage et d'arrêt du circuit de calcul de signature SCCT est prévu. Ce moyen de démarrage et d'arrêt est par exemple un moyen interrupteur commandé par software, qui permet d'inhiber l'application du signal d'horloge CK1 au circuit SCCT. Des codes-instructions de démarrage et d'arrêt du circuit SCCT sont également prévus, par exemple des codes START SCCT et STOP SCCT, et sont insérés dans le programme, respectivement avant et après la séquence à sécuriser. Par exemple, la séquence décrite plus haut est modifiée comme suit :

```
[LOAD TMR] [CVAL]
```

[TMR ON]
[LOAD REFREG] [WS]
[LOAD CONFREG] [M1, M2, M3]
[RESET SREG]
<démarrage du circuit de calcul de signature>
[START SCCT]
[READ MEM1] [AD1]
[WRITE REGBANK] [AD2]
<arrêt du circuit de calcul de signature>
[STOP SCCT]

D'autre part, le calcul de la signature attendue doit dans ce cas prendre en compte des opérations que le CPU effectue avant l'arrêt effectif du circuit SCCT. Il s'agit notamment des cycles de lecture de l'instruction STOP SCCT (cycles fetch) qui interviennent avant l'exécution proprement dite du code instruction.

De façon générale, il est à la portée de l'homme de l'art de prévoir divers autres modes de réalisation d'un circuit de détection d'erreur permettant de mettre par défaut le circuit intégré dans un mode d'erreur potentiel et de rendre actif le mode d'erreur au terme du comptage d'un intervalle de temps, sauf si la signature courante est entre-temps devenue égale à la signature attendue.

**Revendications**

1. Procédé pour surveiller l'exécution d' une séquence de codes-instructions dans un circuit intégré (IC) comprenant une unité centrale de traitement (CPU) prévue pour exécuter de tels codes-instructions, comprenant des étapes consistant à :

   - pendant l'exécution de la séquence, prélever dans le circuit intégré des signaux logiques déterministes et produire des signatures cumulatives courantes à partir des signaux logiques déterministes et en synchronisation avec un signal d'horloge, chaque signature cumulative courante étant fonction de la signature cumulative précédente et des signaux logiques déterministes, jusqu'à obtenir, au terme de l'exécution de la séquence, une signature cumulative finale, et
   - comparer la signature cumulative finale avec une signature attendue (WS),

   **caractérisé en ce que** :

   - pendant l'exécution de la séquence, les signatures cumulatives courantes sont générées à partir de signaux logiques déterministes (G1, G2, G3, $a_0$ à $a_{M-1}$, $d_0$ à $d_{N-1}$, $C_0$ à $C_{R-1}$) d'adresse, de contrôle ou de données intervenant dans l'exécution de la séquence, prélevés en divers points (DB, AB, CB) du circuit intégré au moyen d'un circuit de calcul de signatures à logique câblée (SCCT) comprenant des entrées parallèles (I1, 12, I3) reliées à divers points (DB, AB, CB) du circuit intégré où transitent des signaux logiques déterministes et non déterministes (G1, G2, G3, $a_0$ à $a_{M-1}$, $d_0$ à $d_{N-1}$, $c_0$ à $c_{K-1}$) d'adresse, de contrôle ou de données intervenant dans l'exécution de la séquence, et
   - des entrées du circuit de calcul de signatures sont inhibées lorsque les signaux logiques ne sont pas déterministes.

2. Procédé selon la revendication 1, dans lequel le signal d'horloge (CK1) qui rythme la production des signatures est le signal d'horloge de l'unité centrale, et dans lequel une signature cumulative courante (CCS) est produite à chaque cycle d'horloge de l'unité centrale, pendant l'exécution de la séquence.

3. Procédé selon l'une des revendications 1 et 2, dans lequel les signaux logiques déterministes d'adresse, de contrôle ou de données en fonction desquels les signatures cumulatives courantes sont produites comprennent tout ou partie des signaux suivants : des adresses ($a_0$ à $a_{M-1}$) appliquées à des éléments périphériques de l'unité centrale (MEM1-MEM3, REGBANK), des signaux ($c_0$ à $c_{K-1}$) de contrôle des éléments périphériques, des signaux indicatif d'opérations en cours (FETCH) , des données ($d_0$ à $d_{N-1}$) formant des opérandes ou des codes-instructions, et dans lequel un signal est exclu du calcul d'une signature cumulative s'il n'est pas déterministe pendant le cycle d'horloge durant lequel la signature est produite.

4. Procédé selon l'une des revendications 1 à 3, dans lequel des entrées du circuit de calcul de signatures sont inhibées au moyen d'un circuit de masquage à logique câblée configurable (CLM).

**5.** Procédé selon l'une des revendications 1 à 4, dans lequel les entrées (11, 12, I3) du circuit de calcul de signatures sont connectées à un bus de données (DB), à un bus d'adresse (AB), et à un bus de contrôle (CB) véhiculant des signaux de contrôle d'éléments périphériques de l'unité centrale.

**6.** Procédé selon l'une des revendications 1 à 5, dans lequel le calcul des signatures cumulatives est effectué au moyen d'un registre à décalage à contre-réaction linéaire (SCCT, LFSR).

**7.** Procédé selon l'une des revendications 1 à 6, comprenant les étapes consistant à :

- pendant l'exécution de la séquence, produire un signal d'erreur (ERS) ayant par défaut une valeur active tant que la signature cumulative courante (CCS) est différente d'une signature attendue (WS),
- masquer le signal d'erreur pendant un intervalle de temps prédéterminé correspondant sensiblement à la durée d'exécution présumée de la séquence, et
- lever inconditionnellement le masquage du signal d'erreur à l'expiration de l'intervalle de temps prédéterminé.

**8.** Procédé selon l'une des revendications 1 à 7, comprenant des étapes de conception d'un programme qui comporte la séquence de codes-instruction, les étapes de conception comprenant l'insertion dans le programme d'instructions de sélection des signaux déterministes à partir desquels les signatures courantes sont produites pendant l'exécution de la séquence.

**9.** Circuit intégré (IC) comprenant une unité centrale de traitement (CPU) pour exécuter un programme comprenant des codes-instructions, et des moyens de surveillance de l'exécution d'au moins une séquence de codes-instructions comportant au moins un code-instruction, les moyens de surveillance comprenant un circuit de calcul de signatures recevant des signaux logiques déterministes prélevés dans le circuit intégré et agencé pour produire des signatures cumulatives courantes qui sont fonction des signaux déterministes, jusqu'à l'obtention d'une signature cumulative finale au terme de l'exécution de la séquence, et des moyens de comparaison de la signature cumulative finale avec une signature attendue,
**caractérisé en ce que** :

- le circuit (SCCT) de calcul de signatures comprend des entrées parallèles (I1, I2, I3) reliées à divers points (DB, AB, CB) du circuit intégré où transitent des signaux logiques déterministes et non déterministes (G1, G2, G3, $a_0$ à $a_{M-1}$, $d_0$ à $d_{N-1}$, $c_0$ à $c_{K-1}$) d'adresse, de contrôle ou de données intervenant dans l'exécution de la séquence,

et **en ce qu'**il comprend un circuit de masquage à logique câblée configurable (CLM), pour inhiber les entrées du circuit de calcul de signatures susceptibles de recevoir des signaux non déterministes pendant l'exécution de la séquence.

**10.** Circuit intégré selon la revendication 9, dans lequel le circuit de masquage à logique câblée configurable (CLM) comprend un registre (CONFREG) accessible au moins en écriture pour recevoir une chaîne de bits (M1, M2, M3) formant un masque binaire.

**11.** Circuit intégré selon l'une des revendications 9 et 10, dans lequel le circuit de calcul de signatures comprend des entrées reliées à des points du circuit intégré où transitent tout ou partie des signaux suivants : des adresses ($a_0$ à $a_{M-1}$) appliquées à des éléments périphériques (MEM1-MEM3, REGBANK) de l'unité centrale, des signaux ($c_0$ à $c_{K-1}$) de contrôle des éléments périphériques, des signaux indicatif d'opérations en cours (FETCH), des données ($d_0$ à $d_{N-1}$) formant des opérandes ou des codes-instructions.

**12.** Circuit intégré selon l'une des revendications 9 à 11, dans lequel le circuit de calcul de signatures comprend des entrées (I1) reliées à un bus de données (DB), des entrées (I2) reliées à un bus d'adresse (AD), et des entrées (I3) reliées à un bus de contrôle (CB) sur lequel transitent des signaux de contrôle d'éléments périphériques (MEM1-MEM3, REGBANK) de l'unité centrale.

**13.** Circuit intégré selon l'une des revendications 9 à 12, dans lequel les moyens de production d'un signal d'erreur comprennent :

- une minuterie (TMR) pour mesurer un intervalle de temps prédéterminé,
- des moyens (COMP, FF) pour produire un signal d'erreur (ERS) ayant par défaut une valeur active tant que la signature cumulative courante (CCS) est différente de la signature attendue (WS), et
- des moyens (AG, TS) pour masquer le signal d'erreur pendant la mesure de l'intervalle de temps par la minuterie, et lever inconditionnellement le signal d'erreur à l'expiration de l'intervalle de temps .

**14.** Circuit intégré selon la revendication 13, comprenant :

- un comparateur (COMP) dont la sortie fournit le signal d'erreur, recevant sur une entrée la signature cumulative courante (CCS) et sur une autre entrée la signature attendue (WS),
- un moyen à mémoire tel une bascule (FF) pour fournir le signal d'erreur, agencé pour désactiver le signal d'erreur lorsque la sortie du comparateur indique une égalité de signatures, et
- un circuit logique (AG) de masquage du signal d'erreur, recevant sur une entrée le signal d'erreur et sur une autre entrée un signal (TS) fournit par la minuterie, le circuit logique de masquage étant transparent ou non transparent vis-à-vis du signal d'erreur selon la valeur du signal (TS) émis par la minuterie.

**15.** Circuit intégré selon l'une des revendications 9 à 14, dans lequel le circuit de calcul de signatures (SCCT) est cadencé par un signal d'horloge (CK1) de l'unité centrale, et calcule une signature cumulative courante à chaque cycle d'horloge, en remplaçant chaque signature précédente par une nouvelle signature, dans un registre (SREG) de mémorisation de la signature courante.

## Claims

**1.** A method for monitoring the execution of a sequence of instruction codes in an integrated circuit (IC) comprising a central processing unit (CPU) provided for executing such instruction codes, comprising:

- during the execution of the sequence, taking off at the integrated circuit, deterministic logic signals and producing current cumulative signatures from the deterministic logic signals and in synchronisation with a clock signal, each current cumulative signature being the function of the previous cumulative signature and the deterministic logic signals, until obtaining, at the end of the execution of the sequence, a final cumulative signature, and
- comparing the final cumulative signature with an expected signature (WS),

**characterised in that**:

- during the execution of the sequence, the current cumulative signatures are generated from deterministic address, control or data logic signals (G1, G2, G3, $a_0$ to $a_{M-1}$, do to $d_{N-1}$, $c_0$ to $c_{K-1}$) involved in the execution of the sequence, taken off at various points (DB, AB, CB) of the integrated circuit by means of a hard-wired logic signature calculation circuit (SCCT) comprising parallel inputs (I1, I2, I3) linked to various points (DB, AB, CB) of the integrated circuit where deterministic and non deterministic address, control or data logic signals (G1, G2, G3, $a_0$ to $a_{M-1}$, do to $d_{N-1}$, $c_0$ to $c_{K-1}$) involved in the execution of the sequence pass, and
- inputs of the signature calculation circuit are inhibited when the logic signals are not deterministic.

**2.** Method according to claim 1, wherein the clock signal (CK1) which paces the production of signatures is the clock signal of the central processing unit, and wherein a current cumulative signature (CCS) is produced at each clock cycle of the central processing unit, during the execution of the sequence.

**3.** Method according to one of claims 1 and 2, wherein the deterministic address, control or data logic signals according to which the current cumulative signatures are produced comprise all or part of the following signals: addresses ($a_0$ to $a_{M-1}$) applied to peripheral elements of the central processing unit (MEM1-MEM3, REGBANK), signals (co to $c_{K-1}$) for controlling the peripheral elements, signals indicative of operations in progress (FETCH), data ($d_0$ to $d_{N-1}$) forming operands or instruction codes, and wherein a signal is excluded from the calculation of a cumulative signature if it is not deterministic during the clock cycle during which the signature is produced.

**4.** Method according to one of claims 1 to 3, wherein inputs of the signature calculation circuit are inhibited by means of a configurable hard-wired logic masking circuit (CLM).

**5.** Method according to claims 1 to 4, wherein inputs (I1, I1, I3) of the signature calculation circuit are connected to a data bus (DB), an address bus (AB), and a control bus (CB) carrying signals for controlling peripheral elements of the central processing unit.

**6.** Method according to one of claims 1 to 5, wherein the calculation of the cumulative signatures is performed by means of a linear feedback shift register (SCCT, LFSR).

**7.** Method according to one of claims 1 to 6, comprising:

- during the execution of the sequence, producing an error signal (ERS) having an active value by default while the current cumulative signature (CCS) is different from an expected signature (WS),
- masking the error signal for a predetermined time interval corresponding substantially to the presumed duration of execution of the sequence, and
- unconditionally lifting the masking of the error signal when the predetermined time interval expires.

**8.** Method according to one of claims 1 to 7, comprising steps of designing a program that comprises the sequence of instruction codes, the design steps comprising inserting, into the program, instructions for selecting the deterministic signals from which the current signatures are produced during the execution of the sequence.

**9.** An integrated circuit (IC) comprising a central processing unit (CPU) for executing a program comprising instruction codes, and means for monitoring the execution of at least one sequence of instruction codes comprising at least one instruction code, the monitoring means comprising a signature calculation circuit receiving deterministic logic signals taken off at the integrated circuit and arranged to produce current cumulative signatures which are function of the deterministic signals, until obtaining a final cumulative signature at the end of the execution of the sequence, and means for comparing the final cumulative signature with an expected signature, **characterised in that**:

- the signature calculation circuit (SCCT) comprises parallel inputs (I1, I2, I3) linked to various points (DB, AB, CB) of the integrated circuit through which deterministic and non deterministic address, control or data logic signals (G1, G2, G3, $a_0$ to $a_{M-1}$, $d_0$ to $d_{N-1}$, $c_0$ to $c_{K-1}$) involved in the execution of the sequence pass,

and **in that** it comprises a configurable hard-wired logic masking circuit (CLM), for inhibiting the inputs of the signature calculation circuit susceptible of receiving non deterministic signals during the execution of the sequence.

**10.** Integrated circuit according to claim 9, wherein the configurable hard-wired logic masking circuit (CLM) comprises a register (CONFREG) at least write-accessible for receiving a string of bits (M1, M2, M3) forming a binary mask.

**11.** Integrated circuit according to one of claims 9 and 10, wherein the signature calculation circuit comprises inputs linked to points of the integrated circuit through which all or part of the following signals pass: addresses ($a_0$ to $a_{M-1}$) applied to peripheral elements (MEM1-MEM3, REGBANK) of the central processing unit, signals (co to $c_{K-1}$) for controlling the peripheral elements, signals indicative of operations in progress (FETCH), data ($d_0$ to $d_{N-1}$) forming operands or instruction codes.

**12.** Integrated circuit according to one of claims 9 to 11, wherein the signature calculation circuit comprises inputs (I1) linked to a data bus (DB), inputs (I2) linked to an address bus (AD), and inputs (I3) linked to a control bus (CB) on which signals for controlling peripheral elements (MEM1-MEM3, REGBANK) of the central processing unit pass.

**13.** Integrated circuit according to one of claims 9 to 12, wherein the means for producing an error signal comprise:

- a timer (TMR) for measuring a predetermined time interval,
- means (COMP, FF) for producing an error signal (ERS) having an active value by default while the current cumulative signature (CCS) is different from the expected signature (WS), and
- means (AG, TS) for masking the error signal during the measurement of the time interval by the timer, and unconditionally lifting the error signal when the time interval expires.

**14.** Integrated circuit according to claim 13, comprising:

- a comparator (COMP) the output of which supplies the error signal, receiving the current cumulative signature (CCS) at one input and the expected signature (WS) at another input,
- a memory means such as a flip-flop (FF) for supplying the error signal, arranged for deactivating the error signal when the output of the comparator indicates an equality of signatures, and
- a logic circuit (AG) for masking the error signal, receiving the error signal at one input and a signal (TS) supplied by the timer at another input, the masking logic circuit being transparent or non-transparent in relation to the error signal according to the value of the signal (TS) sent by the timer.

**15.** Integrated circuit according to one of claims 9 to 14, wherein the signature calculation circuit (SCCT) is paced by a clock signal (CK1) of the central processing unit, and calculates a current cumulative signature at each clock cycle, by replacing each previous signature with a new signature, in a register (SREG) for storing the current signature.

**Patentansprüche**

**1.** Verfahren zum Überwachen der Ausführung einer Sequenz von Codes-Befehlen in einer integrierten Schaltung (IC) umfassend eine zentrale Verarbeitungseinheit (CPU), die vorgesehen ist, um derartige Codes-Befehle auszuführen, umfassend die Schritte, die Folgendes beinhalten:

- während der Ausführung der Sequenz, der integrierten Schaltung deterministische logische Signale entnehmen und laufende kumulative Signaturen anhand der deterministischen logischen Signale und in Synchronisierung mit einem Taktsignal erzeugen, wobei jede laufende kumulative Signatur von der vorhergehenden kumulativen Signatur und den deterministischen logischen Signalen abhängt, bis am Ende der Ausführung der Sequenz eine kumulative Endsignatur erhalten wird, und
- die kumulative Endsignatur mit einer erwarteten Signatur (WS) vergleichen,

**dadurch gekennzeichnet, dass**:

- während der Ausführung der Sequenz, die laufenden kumulativen Signaturen generiert werden anhand von deterministischen logischen Adress-, Steuer- oder Datensignalen (G1, G2, G3, $a_0$ bis $a_{M-1}$, do bis $d_{N-1}$, $c_0$ bis $c_{K-1}$), die in der Ausführung der Sequenz einschreiten, die an verschiedenen Punkten (DB, AB, CB) der integrierten Schaltung entnommen werden mit Hilfe einer Schaltung zur Berechnung von Signaturen mit verdrahteter Logik (SCCT) umfassend Paralleleingänge (I1, I2, I3), die mit verschiedenen Punkten (DB, AB, CB) der integrierten Schaltung verbunden sind, wo deterministische und nicht deterministische logische Adress-, Steueroder Datensignale (G1, G2, G3, $a_0$ bis $a_{M-1}$, do bis $d_{N-1}$, $c_0$ bis $c_{K-1}$), die in der Ausführung der Sequenz einschreiten, transitieren, und
- Eingänge der Schaltung zur Berechnung von Signaturen werden gesperrt, wenn die logischen Signale nicht deterministisch sind.

**2.** Verfahren nach Anspruch 1, in dem das Taktsignal (CK1), das der Erzeugung der Signaturen den Takt gibt, das Taktsignal der Zentraleinheit ist, und in dem bei jedem Taktzyklus der Zentraleinheit bei der Ausführung der Sequenz eine laufende kumulative Signatur (CCS) erzeugt wird.

**3.** Verfahren nach einem der Ansprüche 1 und 2, in dem die deterministischen logischen Adress-, Steuer- oder Datensignale in Abhängigkeit von denen die laufenden kumulativen Signaturen erzeugt werden, alle oder einige der folgenden Signale umfassen: Adressen ($a_0$ bis $a_{M-1}$), die an periphere Elemente der Zentraleinheit (MEM1-MEM3, REGBANK) angewandt werden, Steuersignale (co bis $c_{K-1}$) zum Steuern der peripheren Elemente, für laufende Vorgänge (FETCH) indikative Signale, Daten ($d_0$ bis $d_{N-1}$), die Operanden oder Codes-Befehle bilden, und in dem ein Signal von der Berechnung einer kumulativen Signatur ausgeschlossen wird, wenn es während des Taktzyklus, in dem die Signatur erzeugt wird, nicht deterministisch ist.

**4.** Verfahren nach einem der Ansprüche 1 bis 3, in dem Eingänge der Schaltung zur Berechnung von Signaturen mit Hilfe einer Maskierschaltung mit konfigurierbarer verdrahteter Logik (CLM) gesperrt werden.

**5.** Verfahren nach einem der Ansprüche 1 bis 4, in dem die Eingänge (I1, I2, I3) der Schaltung zur Berechnung von Signaturen an einen Datenbus (DB), an einen Adressbus (AB), und an einen Steuerbus (CB) angeschlossen sind, die Steuersignale zum Steuern von peripheren Elementen der Zentraleinheit transportieren.

**6.** Verfahren nach einem der Ansprüche 1 bis 5, in dem die Berechnung der kumulativen Signaturen mit Hilfe eines Schieberegisters mit linearer Rückkopplung (SCCT, LFSR) ausgeführt wird.

**7.** Verfahren nach einem der Ansprüche 1 bis 6, umfassend die Schritte, die Folgendes beinhalten:

- während der Ausführung der Sequenz ein Fehlersignal (ERS) erzeugen, das standardmäßig einen aktiven Wert aufweist, solange die laufende kumulative Signatur (CCS) anders als eine erwartete Signatur (WS) ist,
- das Fehlersignal während eines vorbestimmten Zeitintervalls, der im Wesentlichen der angenommenen Ausführungsdauer der Sequenz entspricht, maskieren, und
- bedingungslos die Maskierung des Fehlersignals nach Ablauf des vorbestimmten Zeitintervalls aufheben.

8. Verfahren nach einem der Ansprüche 1 bis 7, umfassend Entwurfsschritte eines Programms, das die Codes-Befehl-Sequenz umfasst, wobei die Entwurfsschritte das Einfügen in das Programm von Befehlen für die Auswahl der deterministischen Signale, anhand der die laufenden Signaturen während der Ausführung der Sequenz erzeugt werden, umfassen.

9. Integrierte Schaltung (IC) umfassend eine zentrale Verarbeitungseinheit (CPU) zum Ausführen eines Programms umfassend Codes-Befehle, und Mittel zur Überwachung der Ausführung von zumindest einer Sequenz von Codes-Befehlen mit zumindest einem Code-Befehl, wobei die Überwachungsmittel eine Schaltung zur Berechnung von Signaturen umfassen, die deterministische logische Signale empfängt, die der integrierten Schaltung entnommen werden, und die angeordnet ist, um laufende kumulative Signaturen, die von den deterministischen Signalen abhängen, bis zum Erhalt einer kumulativen Endsignatur am Ende der Ausführung der Sequenz zu erzeugen, und Mittel zum Vergleichen der kumulativen Endsignatur mit einer erwarteten Signatur,
**dadurch gekennzeichnet, dass**:

- die Schaltung (SCCT) zur Berechnung von Signaturen Paralleleingänge (I1, I2, I3) umfasst, die mit verschiedenen Punkten (DB, AB, CB) der integrierten Schaltung verbunden sind, wo deterministische und nicht deterministische logische (G1, G2, G3, $a_0$ bis $a_{M-1}$, do bis $d_{N-1}$, $c_0$ bis $c_{K-1}$) Adress-, Steuer- oder Datensignale, die in der Ausführung der Sequenz einschreiten, transitieren, und **dadurch** dass sie eine Maskierschaltung mit konfigurierbarer verdrahteter Logik (CLM) umfasst, um die Eingänge der Schaltung zur Berechnung von Signaturen zu sperren, die während der Ausführung der Sequenz nicht deterministische Signale empfangen können.

10. Integrierte Schaltung nach Anspruch 9, in der die Maskierschaltung mit konfigurierbarer verdrahteter Logik (CLM) ein Register (CONFREG) umfasst, das zumindest schreibzugänglich ist, um eine Bitkette (M1, M2, M3), die eine binäre Maske bildet, zu empfangen.

11. Integrierte Schaltung nach einem der Ansprüche 9 und 10, in der die Schaltung zur Berechnung von Signaturen Eingänge umfasst, die mit Punkten der integrierten Schaltung verbunden sind, wo alle oder einige der folgenden Signale transitieren: Adressen ($a_0$ bis $a_{M-1}$), die an periphere Elemente (MEM1-MEM3, REGBANK) der Zentraleinheit angewandt werden, Steuersignale (co bis $c_{K-1}$) zum Steuern der peripheren Elemente, für laufende Vorgänge (FETCH) indikative Signale, Daten ($d_0$ bis $d_{N-.1}$), die Operanden oder Codes-Befehle bilden.

12. Integrierte Schaltung nach einem der Ansprüche 9 bis 11, in der die Schaltung zur Berechnung von Signaturen Eingänge (I1) umfasst, die mit einem Datenbus (DB) verbunden sind, Eingänge (I2), die mit einem Adressbus (AD) verbunden sind, und Eingänge (I3), die mit einem Steuerbus (CB) verbunden sind, an dem Steuersignale zum Steuern von peripheren Elementen (MEM1-MEM3, REGBANK) der Zentraleinheit transitieren.

13. Integrierte Schaltung nach einem der Ansprüche 9 bis 12, in dem die Mittel zur Erzeugung eines Fehlersignals Folgendes umfassen:

- einen Zeitmesser (TMR), um einen vorbestimmten Zeitintervall zu messen,
- Mittel (COMP, FF) zum Erzeugen eines Fehlersignals (ERS), das standardmäßig einen aktiven Wert aufweist, solange die laufende kumulative Signatur (CCS) anders als die erwartete Signatur (WS) ist, und
- Mittel (AG, TS), um das Fehlersignal beim Messen des Zeitintervalls durch den Zeitmesser zu maskieren, und um das Fehlersignal nach Ablauf des Zeitintervalls bedingungslos aufzuheben.

14. Integrierte Schaltung nach Anspruch 13, umfassend:

- einen Komparator (COMP) dessen Ausgang das Fehlersignal liefert, und der an einem Eingang die laufende kumulative Signatur (CCS) und an einem anderen Eingang die erwartete Signatur (WS) empfängt,
- ein Speichermittel wie ein Flip-Flop (FF), um das Fehlersignal zu liefern, das angeordnet ist, um das Fehlersignal zu deaktivieren, wenn der Ausgang des Komparators eine Gleichheit der Signaturen angibt, und
- eine Logikschaltung (AG) zum Maskieren des Fehlersignals, die an einem Eingang das Fehlersignal und an einem anderen Eingang ein Signal (TS), das vom Zeitmesser geliefert wird, empfängt, wobei die Logikschaltung zum Maskieren nach dem Wert des vom Zeitmesser ausgegebenen Signals (TS) im Hinblick auf das Fehlersignal transparent oder nicht transparent ist.

15. Integrierte Schaltung nach einem der Ansprüche 9 bis 14, in der die Schaltung zur Berechnung von Signaturen (SCCT) durch ein Taktsignal (CK1) der Zentraleinheit taktiert ist, und bei jedem Taktzyklus eine laufende kumulative Signatur berechnet, indem jede vorhergehende Signatur durch eine neue Signatur in einem Speicherungsregister (SREG) zum Speichern der laufenden Signatur ersetzt wird.

**Fig. 1**

**Fig. 2**

**EP 1 589 395 B1**

**RÉFÉRENCES CITÉES DANS LA DESCRIPTION**

**Documents brevets cités dans la description**

- EP 1161725 A

- US 0034823 A